# EUROPEAN PATENT SPECIFICATION

(11) **EP 3 991 621 B1**
(45) Date of publication and mention of the grant of the patent: **17.07.2024**
(21) Application number: 21204763.3
(22) Date of filing: 26.10.2021
(51) Int. Cl.: A47K 13/30, H04W 4/80, A47K 13/24

(54) **NFC SMART TOILET TOP MOUNT**
INTELLIGENTER NFC-TOILETTENAUFSATZ
SUPPORT SUPÉRIEUR DE TOILETTES À PUCE NFC

(30) Priority: 27.10.2020 CN 202022412572 U
(43) Date of publication of application: 04.05.2022
(73) Proprietor: Geberit International AG, 8645 Jona (CH)
(72) Inventor: QIAN, Weian, 201802 Shanghai (CN); YUAN, Yihui, 201802 Shanghai (CN); YOU, Hang, 201802 Shanghai (CN); YANG, Liang, 201802 Shanghai (CN)
(74) Representative: König Szynka Tilmann von Renesse Patentanwälte Partnerschaft mbB München

(56) References cited:
- EP-A1- 3 357 387
- CN-U- 203 302 977
- JP-A- 2020 151 021
- US-A1- 2018 213 984

## Description

### Field of the Invention

The invention relates to the field of sanitary and bathroom equipment and to a Near Field Communication (NFC) smart top mount.

### Background of the Invention

With the improvement of people's living standards and hygiene awareness, the popularizing rate of smart toilets is getting higher and higher. Many families have already chosen smart toilets when renovating, and moreover, some families have replaced ordinary toilet covers with smart toilet top mounts. In addition, some hotels and guest houses are also equipped with the smart toilets, making the application of the smart toilets wider.

With the increasement of user demands, a variety of functions have been simultaneously integrated into a single smart top mount for a toilet, such as heating, warm water cleaning, warm air drying, deodorization and sterilization, and other functions. Another function is shown in the JP 2020151021 A, showing an electrocardiographic measuring device capable of performing health analyses of the user while sitting on the toilet seat. The gathered data is processed and displayed to the user on an external display unit connected in a wireless manner. However, in the case of increasingly diverse function integration of smart top mounts, users' understanding of functions can still only stay in the specification and manual attached to a product, information acquisition is abstract, and it is difficult for a user to carry out practical experience according to the specification. If data are lost, the user can only understand how to use it through telephone customer service or network channels.

### Summary of the Invention

In view of the above defects of the prior art, the technical problem to be solved by the invention is to directly obtain function-related information and after-sales channel information of a product and the like conveniently and quickly in the use of a top mount.

In order to achieve the above purposes, the invention provides an NFC smart top mount, including a top mount outer cover, a top mount upper cover and a top mount seat ring, the top mount seat ring is connected with the top mount outer cover in a pivotable manner, the top mount upper cover is connected with the top mount outer cover through a first supporting point and a second supporting point in a pivotable manner, and pivoting angles and pivoting directions of the top mount seat ring and the top mount upper cover are the same;
wherein, an NFC electronic tag is attached to an inner edge of the top mount outer cover and includes an NFC coil and a storage chip electrically connected with the NFC coil, and the NFC coil is spirally distributed; and the NFC electronic tag responds to an approaching NFC identification terminal and feeds pre-stored data back to the NFC identification terminal.

Further, the first supporting point includes two oppositely-arranged plane parts and two oppositely-arranged arc parts, the plane parts and the arc parts are mutually connected, the first supporting point is fixedly connected with the top mount outer cover, the top mount upper cover includes a first hinge part and a second hinge part respectively connected with the first supporting point and the second supporting point, the first hinge part includes a cavity and an opening, the first supporting point enters the cavity along the opening, and a center of the cavity is superposed with an axis of the first supporting point.

Further, bending radians of arc parts are consistent with a bending radian of a cavity.

Further, the second supporting point is a damper, and the second hinge part is in an interference fit with the damper.

Further, a width of the opening is smaller than a relative distance between the two plane parts.

The invention has the technical effect of enabling a user to conveniently and quickly view related information and after-sales channel information of the product.

The conception, specific structure and produced technical effect of the invention will be further explained below in combination with the drawings to fully understand the purposes, features and effects of the invention.

### Brief Description of the Drawings

By reading the detailed description of the non-restrictive embodiment with reference to the drawings below, other features, purposes and advantages of the invention will be more apparent:
Fig. 1 shows a schematic structural diagram of an embodiment of the invention;
Fig. 2 shows a schematic structural diagram of the embodiment of the invention;
Fig. 3 shows a schematic structural diagram of an NFC electronic tag of the invention;
Fig. 4 shows a partial enlarged drawing of the embodiment of the invention; and
Fig. 5 shows a structural enlarged drawing of the embodiment of the invention.

The description on signs of the drawings: 10-top mount outer cover; 11-top mount seat ring; 12-top mount upper cover; 20-first supporting point; 201-plane part;
202-arc part; 30-first hinge part; 4-NFC electronic tag; 41-storage chip; 42-NFC coil; 43-bonding layer; 5-second supporting point; 6-second hinge part.

### Detailed Description of the Embodiment

A preferred embodiment of the invention is introduced below with reference to the drawings of the description to make its technical contents clearer and convenient to understand.

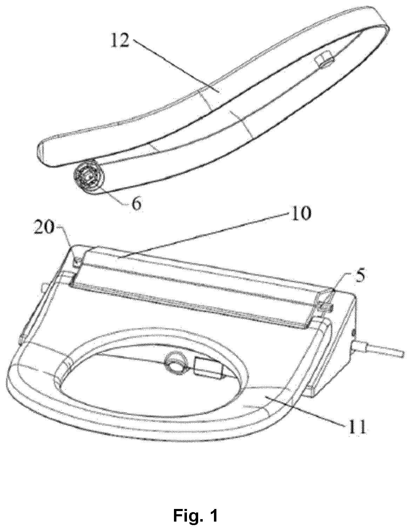

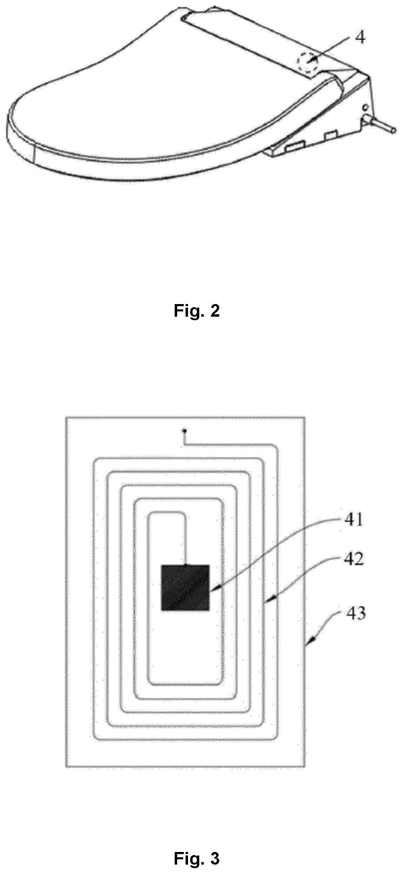

As shown in Fig. 1 to Fig. 3, the invention discloses an NFC smart top mount, including a top mount outer cover 10, a top mount upper cover 12 and a top mount seat ring 11, the top mount seat ring 11 is connected with the top mount outer cover 10 in a pivotable manner, the top mount upper cover 12 is connected with the top mount outer cover 10 through a first supporting point 20 and a second supporting point 5 in a pivotable manner, and pivoting angles and pivoting directions of the top mount seat ring 11 and the top mount upper cover 12 are the same;
wherein, an NFC electronic tag 4 is attached to an inner edge of the top mount outer cover 10 and includes an NFC coil 42 and a storage chip 41 electrically connected with the two ends of the NFC coil, and the NFC coil 42 is spirally distributed; and the NFC electronic tag 4 feeds pre-stored data back to an NFC identification terminal in response to the approaching NFC identification terminal.

The storage chip 41 of the NFC electronic tag 4 can store related information of a current product, for example, a functional specification, after-sales channel information and the like, and through the NFC identification terminal, usually, after a mobile phone approaches the NFC electronic tag 4, a user can receive a usage instructions of related functions. Besides, the NFC electronic tag 4 further includes a bonding layer 43, which is used for attaching the NFC electronic tag 4 to the top mount outer cover 10, and the NFC electronic tag 4 can be attached to any position of the top mount outer cover 10, usually on a position convenient for the user to contact, for example, a button edge of the smart top mount, etc.

The NFC electronic tag 4 is attached to the inside or of the top mount outer cover 10, in that way it ensures the identification terminal can identify the electronic tag.

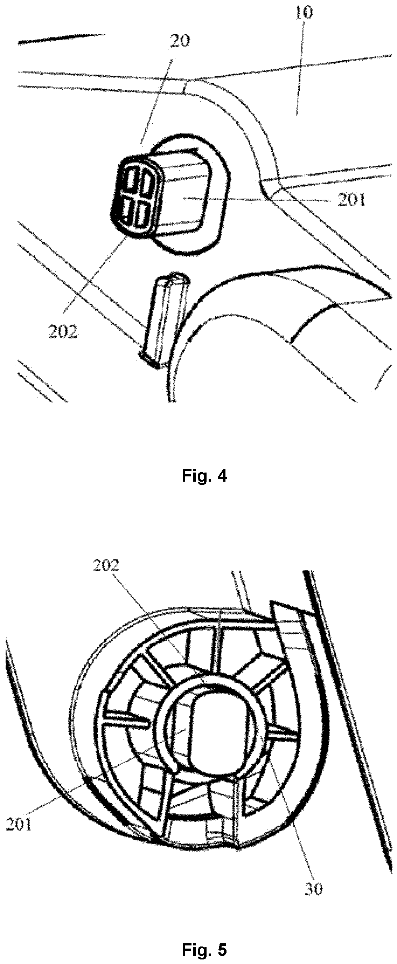

Further, as shown in Fig. 4 and Fig. 5, the first supporting point 20 includes two oppositely-arranged plane parts 201 and two oppositely-arranged arc parts 202, the plane parts 201 and the arc parts 202 are mutually connected, the first supporting point 20 is fixedly connected with the top mount outer cover 10, the top mount upper cover 12 includes a first hinge part 30 and a second hinge part 6 respectively connected with the first supporting point 20 and the second supporting point 5, the first hinge part includes a cavity and an opening, the first supporting point 20 enters the cavity along the opening, and a center of the cavity is superposed with an axis of the first supporting point 20.

The first supporting point 20 is composed of the two oppositely-arranged plane parts 201 and the two oppositely-arranged arc parts 202, forming an oblateness-like shape, is fixed to the top mount outer cover 10, and thus cannot rotate. The first hinge part 30 is of a 'U'-like structure, and the first supporting point 20 enters the cavity of the first hinge part 30 from its opening, thereby enabling the top mount upper cover 12 to pivot along the first supporting point 20. For the second hinge part 6, it should be connected with the turnover second supporting point 5, thereby achieving overall pivoting function of the top mount upper cover 12.

Further, radians of the arc parts 202 are the same as a radian in the cavity, thereby enabling the top mount upper cover 12 to overturn more smoothly.

Further, a width of the opening is smaller than a relative distance between the two plane parts 201. The smart top mount is usually made of plastic and thus has certain elasticity, in the case that the width of the opening is smaller than the relative distance between the two plane parts 201, the opening is propped open by the first supporting point 20 firstly, and after reaching a mounting position, the opening is closed to enclose the first supporting point 20, thereby avoiding the top mount upper cover 12 from being accidentally separated from the first supporting point 20 during using and enhancing the stability in use.

Further, the second supporting point 5 is a damper, and the second hinge part 6 is in an interference fit with the damper. Thus a slow-descending function can be added to the smart top mount, so that using is safer.

Thus the top mount upper cover 12 can be conveniently detached from the smart top mount according to needs. As long as an opening surface is adjusted to be perpendicular to extension directions of the plane parts 201, the first hinge part 30 can be separated from the first supporting point 20 by upwards lifting the top mount upper cover 12 at the moment, and then the second hinge part 6 is transversely detached from the second supporting point 5.

## Claims

1. An NFC smart top mount, wherein the NFC smart top mount comprises a top mount outer cover (10), a top mount upper cover (12) and a top mount seat ring (11), the top mount seat ring (11) is connected with the top mount outer cover (10) in a pivotable manner, the top mount upper cover (12) is connected with the top mount outer cover (10) through a first supporting point (20) and a second supporting point (5) in a pivotable manner, and pivoting angles and pivoting directions of the top mount seat ring (11) and the top mount upper cover (12) are the same;
wherein, an NFC electronic tag (4) is attached to an inner edge of the top mount outer cover (10) and comprises an NFC coil (42) and a storage chip (41) electrically connected with the NFC coil (42), and the NFC coil (42) is spirally distributed; and the NFC electronic tag responds to an approaching NFC identification terminal and feeds pre-stored data back to the NFC identification terminal.

2. The NFC smart top mount according to claim 1, wherein the first supporting point (20) comprises two oppositely-arranged plane parts (201) and two oppositely-arranged arc parts (202), the plane parts (201) and the arc parts (202) are mutually connected, the first supporting point (20) is fixedly connected with the top mount outer cover (10), the top mount upper cover (12) comprises a first hinge part (30) and a second hinge part (6) respectively connected with the first supporting point (20) and the second supporting point (5), the first hinge part (30) comprises a cavity and an opening, the first supporting point (20) enters the cavity along the opening, and a center of the cavity is superposed with an axis of the first supporting point (20).

3. The NFC smart top mount according to claim 2, wherein bending radians of arc parts (202) are consistent with a bending radian of a cavity.

4. The NFC smart top mount according to claim 2 or 3, wherein the second supporting point (5) is a damper, and a second hinge part (6) is in an interference fit with the damper.

5. The NFC smart top mount according to claim 2, 3 or 4, wherein a width of an opening is smaller than a relative distance between two plane parts (201).

## Patentansprüche

1. Intelligentes NFC-Aufsatzgerät, welches intelligente NFC-Aufsatzgerät ein Aufsatzgerät-Außengehäuse (10), eine obere Aufsatzgerät-Abdeckung (12) und einen Aufsatzgerät-Sitzring (11) aufweist, wobei der Aufsatzgerät-Sitzring (11) mit dem Aufsatzgerät-Außengehäuse (10) schwenkbar verbunden ist, die obere Aufsatzgerät-Abdeckung (12) mit dem Aufsatzgerät-Außengehäuse (10) über einen ersten Haltepunkt (20) und einen zweiten Haltepunkt (5) schwenkbar verbunden ist und Schwenkwinkel und Schwenkrichtungen des Aufsatzgerät-Sitzrings (11) und der oberen Aufsatzgerät-Abdeckung (12) die gleichen sind;
wobei an einer Innenkante des Aufsatzgerät-Außengehäuses (10) eine elektronische NFC-Markierung (4) befestigt ist, welche eine NFC-Spule (42) und einen mit der NFC-Spule (42) elektrisch verbundenen Speicherchip (41) aufweist, wobei die NFC-Spule (42) spiralförmig verteilt ist; und die elektronische NFC-Markierung auf ein sich annäherndes NFC-Identifikationsterminal anspricht und vorab gespeicherte Daten zu dem NFC-Identifikationsterminal zurückleitet.

2. Intelligentes NFC-Aufsatzgerät nach Anspruch 1, bei dem der erste Haltepunkt (20) zwei entgegengesetzt angeordnete plane Teile (201) und zwei entgegengesetzt angeordnete gebogene Teile (202) aufweist, wobei die planen Teile (201) und die gebogenen Teile (202) miteinander verbunden sind, der erste Haltepunkt (20) mit dem Aufsatzgerät-Außengehäuse (10) fest verbunden ist, die obere Aufsatzgerät-Abdeckung (12) ein erstes Gelenkteil (30) und ein zweites Gelenkteil (6) aufweist, die mit dem ersten Haltepunkt (20) bzw. dem zweiten Haltepunkt (5) verbunden sind, der erste Gelenkteil (30) einen Hohlraum und eine Öffnung aufweist, der erste Haltepunkt (20) durch die Öffnung in den Hohlraum eingreift und eine Mitte des Hohlraums auf einer Achse des ersten Haltepunkts (20) liegt.

3. Intelligentes NFC-Aufsatzgerät nach Anspruch 2, bei dem Biegeradien von gebogenen Teilen (202) zu einem Biegeradius eines Hohlraums passen.

4. Intelligentes NFC-Aufsatzgerät nach Anspruch 2 oder 3, bei dem der zweite Haltepunkt (5) ein Dämpfer ist und ein zweiter Gelenkteil (6) mit dem Dämpfer in Presspassung steht

5. Intelligentes NFC-Aufsatzgerät nach Anspruch 2, 3 oder 4, bei dem eine Breite einer Öffnung kleiner als ein Zwischenabstand zwischen zwei planen Teilen (201) ist

## Revendications

1. Abattant intelligent CCP, ledit abattant intelligent CCP comprenant un boitier extérieur d'abattant (10), un couvercle supérieur d'abattant (12) et une lunette d'abattant (11), la lunette d'abattant (11) étant reliée de manière pivotante au boitier extérieur d'abattant (10), le couvercle supérieur d'abattant (12) étant relié au boitier extérieur d'abattant (10) de manière pivotante par un premier point de support (20) et un deuxième point de support (5), et les angles de pivotement et les directions de pivotement de la lunette d'abattant (11) et du couvercle supérieur d'abattant (12) étant identiques ;
une étiquette électronique CCP étant fixée à un bord intérieur du couvercle extérieur d'abattant (10) et comprenant une antenne CCP (42) et une puce mémoire (41) reliée électriquement à l'antenne CCP (42), et l'antenne CCP (42) étant répartie en spirale ; l'étiquette électronique CCP répondant à l'approche d'un terminal d'identification CCP et renvoyant des données préenregistrées au terminal d'identification CCP.

2. Abattant intelligent CCP selon la revendication 1, dans lequel le premier point de support (20) comprend deux parties planes (201) opposées l'une à l'autre et deux parties arquées (202) opposées l'une à l'autre, les parties planes (201) et arquées (202) étant reliées entre elles, le premier point de support (20) étant relié de manière fixe au boitier extérieur d'abattant (10), le couvercle supérieur d'abattant (12) comprenant une première partie formant charnière (30) et une deuxième partie formant charnière (6) respectivement reliées au premier point de support (20) et au deuxième point de support (5), la première partie formant charnière (30) comprenant une cavité et une ouverture, le premier point de support (20) pénétrant dans la cavité le long de l'ouverture, et le centre de la cavité étant superposé à un axe du premier point de support (20).

3. Abattant intelligent CCP selon la revendication 2, dans lequel les radians de courbure des parties arquées (202) sont cohérents avec un radian de courbure d'une cavité.

4. Abattant intelligent CCP selon la revendication 2 ou 3, dans lequel le deuxième point de support (5) est un amortisseur, et une deuxième partie formant charnière (6) est en ajustement serré avec l'amortisseur.

5. Abattant intelligent CCP selon la revendication 2, 3 ou 4, dans lequel la largeur d'une ouverture est inférieure à une distance relative entre deux parties planes (201).
